# EUROPÄISCHE PATENTANMELDUNG

(11) **EP 1 820 680 A1**
(43) Veröffentlichungstag der Anmeldung: **22.08.2007**
(21) Anmeldenummer: 07002795.8
(22) Anmeldetag: 09.02.2007
(51) Int. Cl.: B60J 7/12, B60J 7/20

(54) **Cabriolet-Fahrzeug mit einem Faltverdeck**

(30) Priorität: 20.02.2006 DE 102006008124
(71) Anmelder: Magna Car Top Systems GmbH, 74321 Bietigheim-Bissingen (DE)
(72) Erfinder: Papendorf, Marcus, 74354 Besigheim (DE)

(57) **Zusammenfassung**

Ein Cabriolet-Fahrzeug weist ein Faltverdeck (1) mit einem Verdeckgestänge (2) und einem Verdeckbezugstoff (3) auf, wobei dem Verdeckgestänge ein Spannbügel (8) zugeordnet ist, der in Schließposition den Verdeckbezugstoff mit Spannung beaufschlagt. Auf der dem Fahrzeuginnenraum zugewandten Seite des Spannbügels ist eine Abdeckplatte (9) fest am Spannbügel gehalten, die in Schließposition zumindest näherungsweise eine horizontale Stellung einnimmt. Die Abdeckplatte ist bei der Überführung des Faltverdecks zwischen Schließ- und Ablageposition gemeinsam mit dem Spannbügel zu verstellen.

## Beschreibung

Die Erfindung bezieht sich auf ein Cabriolet-Fahrzeug mit einem Faltverdeck nach dem Oberbegriff des Anspruches 1.

Derartige Cabriolet-Fahrzeuge weisen ein zwischen einer Schließposition und einer Ablageposition verstellbares Faltverdeck auf, das einen üblicherweise textilen Verdeckbezugstoff auf einem verstellbaren Verdeckgestänge umfasst, wobei das Faltverdeck in Ablageposition in einem heckseitigen Verdeckkasten abgelegt wird. Dieser Verdeckkasten ist von einem Heckdeckel zu verschließen, der bei geschlossenem Faltverdeck von dem hinteren Abschnitt des Verdeckes überdeckt ist und eine in den Fahrzeuginnenraum einragende Hutablage bildet. Um dem Verdeckbezugstoff bei geschlossenem Dach die erforderliche Stoffspannung aufzuprägen, umfasst das Verdeckgestänge einen so genannten Spannbügel, an den der Verdeckbezugstoff angekoppelt ist und der in Schließposition des Daches eine auf dem Heckdeckel aufliegende Spannposition einnimmt.

Zum Ablegen des Verdecks muss einerseits zunächst die Stoffspannung gelöst und andererseits der Verdeckkasten freigegeben werden. Hierfür wird der Spannbügel um ein karosserieseitiges Gelenk aufgeschwenkt, woraufhin der Heckdeckel geöffnet werden kann und der Zutritt in den Verdeckkasten freigegeben wird. Im Anschluss hieran wird das Faltverdeck in den Verdeckkasten abgelegt. Ein derartiges Fahrzeugdach wird beispielsweise in der US 5,225,747 beschrieben.

Nachteilig bei dieser Ausführung ist, dass ein verhältnismäßig komplexer Bewegungsablauf zum Ablegen des Fahrzeugdaches durchgeführt werden muss. Zunächst muss der Spannbügel um eine karosserieseitige Querachse aufgestellt werden, damit der in Schließposition unter den Spannbügel reichende Heckdeckel aufgeschwenkt und hierdurch der Durchtritt in den Verdeckkasten für das Fahrzeugdach hinein freigegeben werden kann. Nach dem Aufschwenken des Heckdeckels wird der Spannbügel wieder abgesenkt und bis in den Verdeckkasten hinein verschwenkt; zugleich werden die weiteren Teile des Verdeckgestänges einschließlich des Verdeckbezugstoffes um ihre jeweiligen Schwenkachsen nach hinten geklappt und im Verdeckkasten abgelegt.

Ein weiterer Nachteil ist darin zu sehen, dass der Verdeckkasten, in welchem das Fahrzeugdach abgelegt wird, einen Teil des Kofferraumes bildet, jedoch bei abgelegtem Fahrzeugdach keine Trennung zwischen dem Verdeckkasten und dem frei nutzbaren Teil des Kofferraumes existiert. Unter anderem aus Gründen des Schutzes des Faltverdecks ist aber eine derartige Trennung zwischen Verdeckkasten und frei nutzbarem Kofferraum wünschenswert.

Der Erfindung liegt die Aufgabe zugrunde, mit einfachen konstruktiven Maßnahmen ein Cabriolet-Fahrzeug mit einem Faltverdeck dahingehend auszubilden, dass mit geringem Stellaufwand das Fahrzeugverdeck vom frei nutzbaren Kofferraum separiert ist.

Diese Aufgabe wird erfindungsgemäß mit den Merkmalen des Anspruches 1 gelöst. Die Unteransprüche geben zweckmäßige Weiterbildungen an.

Erfindungsgemäß ist vorgesehen, dass auf der dem Fahrzeuginnenraum zugewandten Seite des Spannbügels eine Abdeckplatte fest am Spannbügel gehalten ist, die in Schließposition zumindest näherungsweise eine horizontale Stellung einnimmt. Diese Abdeckplatte befindet sich in Schließposition innerhalb des Fahrzeugdaches und bildet eine Hutablage zwischen dem Fahrgastraum und dem Stauraum bzw. Verdeckkasten, in welchem das abgelegte Faltverdeck aufzunehmen ist. Aufgrund der festen Anbindung der Abdeckplatte an den Spannbügel ist eine gesonderte Stellkinematik für die Bewegung der Abdeckplatte nicht erforderlich; vielmehr wird die Abdeckplatte bei einer Stellbewegung des Spannbügels automatisch mit diesem bewegt.

Diese Ausführung weist weiterhin den Vorteil auf, dass eine verhältnismäßig einfache Ablagebewegung für das Faltverdeck realisiert werden kann, da die Abdeckplatte als ein vom Kofferraum- bzw. Heckdeckel separates Bauteil ausgeführt ist und somit für die Überführung des Fahrzeugdaches von Schließ- in Ablageposition der Kofferraumdeckel angehoben werden kann, ohne den heckseitigen Spannbügel in eine angehobene Position aufschwenken zu müssen.
Vielmehr kann das Verdeckgestänge unter Vermeidung einer Aufschwenkbewegung unmittelbar nach hinten in den Stauraum abgeklappt werden. Gegebenenfalls kann es sogar ausreichend sein, auf eine Anhebung des Kofferraum- bzw. Heckdeckels zu verzichten und das Faltverdeck unmittelbar in den Stauraum zu versenken, wobei diese Ausführung sich für diejenigen Fälle eignet, dass der Stauraum zumindest im Wesentlichen von der Abdeckplatte überdeckt wird.

Aufgrund ihrer festen Position am Spannbügel wird die Abdeckplatte gemeinsam mit dem Spannbügel bei der Überführung von Schließ- in Ablageposition in den Verdeckkasten abgesenkt. Der Spannbügel als heckseitiges Gestängebauteil nimmt in Ablageposition eine unten liegende Stellung im Verdeckgestänge ein. Auch die Abdeckplatte nimmt diese Position ein, wobei gemäß einer vorteilhaften Weiterbildung vorgesehen ist, dass die Abdeckplatte in Ablageposition eine Trennwand zwischen dem Stauraum und dem frei nutzbaren Kofferraum bildet. Die Abdeckplatte bildet hierbei zweckmäßig den Boden des Stauraumes, derart, dass das Verdeckgestänge einschließlich Verdeckbezugstoff oberhalb der Abdeckplatte abgelegt ist. In dieser Ausführung nimmt die Abdeckplatte in Ablageposition eine horizontale Position ein und liegt etwa parallel zu ihrer Schließposition.

Der Spannbügel ist vorteilhaft U-förmig ausgebildet und weist zwei Seitenschenkel auf, die über einen Querabschnitt verbunden sind, wobei der Querabschnitt das am weitesten hinten liegende, dem Heck zugewandte Bauteil des Fahrzeugdaches bildet. Der Spannbügel ist im Bereich der freien Enden seiner Seitenschenkel gelenkig gelagert, insbesondere schwenkbar an einer Stellkonsole gehalten, die ihrerseits schwenkbar an der Fahrzeugkarosserie gelagert ist, wobei die Schwenkachsen zwischen den Seitenschenkeln und der Stellkonsole einerseits und der Stellkonsole und der Fahrzeugkarosserie andererseits bei geschlossenem Fahrzeugdach zweckmäßig parallel, jedoch beabstandet zueinander sind. Zum Ablegen des Fahrzeugdaches wird die Stellkonsole um ihre karosserieseitige Drehachse nach unten in den Stauraum hinein verschwenkt, wobei der Spannbügel einschließlich der daran gehaltenen Abdeckplatte aufgrund des Drehgelenks zwischen den Seitenschenkeln und der Stellkonsole eine Ausgleichs-Schwenkbewegung in Gegenrichtung zur Konsolenbewegung ausführen kann, wodurch die etwa horizontale Lage des Spannbügels und der Abdeckplatte auch in Ablageposition beibehalten werden kann.

Weitere Vorteile und zweckmäßige Ausführungen sind den weiteren Ansprüchen, der Figurenbeschreibung und den Zeichnungen zu entnehmen. Es zeigen:
- Fig. 1: eine perspektivische Ansicht eines Faltverdecks für ein Cabriolet-Fahrzeug, dargestellt in Schließposition, in der der Fahrzeuginnenraum von dem Faltverdeck überdeckt ist, mit einem heckseitigen Spannbügel, an dem eine Abdeckplatte befestigt ist,
- Fig. 2: das Faltverdeck zu Beginn der Ablagebewegung,
- Fig. 3: das Faltverdeck kurz vor Erreichen der Ablageposition,

- Fig. 4: das Faltverdeck in Ablageposition,
- Fig. 5: das Faltverdeck in Ablageposition aus einer anderen Perspektive.

In den Figuren sind gleiche Bauteile mit gleichen Bezugszeichen versehen.

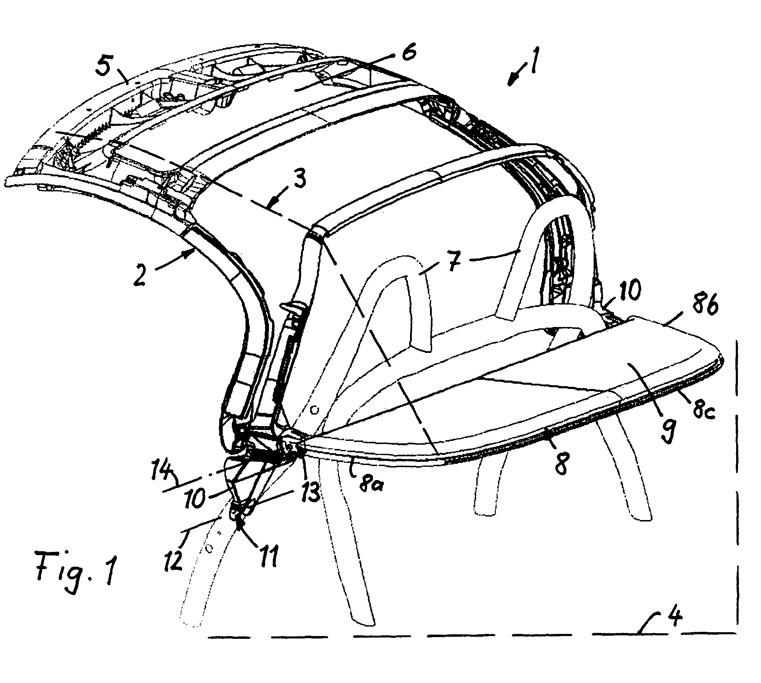

Das in Fig. 1 in Schließposition dargestellte Faltverdeck für ein Cabriolet-Fahrzeug besteht aus einem Verdeckgestänge 2 mit einer Mehrzahl von Spriegeln und Bügeln, die untereinander bzw. an der Fahrzeugkarosserie schwenkbar gelagert sind, und einem von dem Verdeckgestänge 2 getragenen Verdeckbezugstoff 3, der in Schließposition den Fahrzeuginnenraum überspannt. Im Heckbereich befindet sich der karosseriefeste Kofferraum des Fahrzeuges mit einem Stauraum 4, der Bestandteil des Kofferraumes ist und das Faltverdeck in Ablage- bzw. Öffnungsposition aufnimmt. In einem vorderen Abschnitt des Faltverdecks 1 befindet sich benachbart zur vorderen Dachkappe 5, die in Schließposition am Windschutzscheibenrahmen anliegt, ein Schiebedach 6, bestehend aus einer Glasplatte, die bei geschlossenem Faltverdeck zwischen einer Schließ- und einer Öffnungsposition verstellt werden kann.

In dem dem Fahrzeugheck zugewandten Bereich des Daches ist ein Spannbügel 8 angeordnet, welcher ebenfalls Bestandteil des Verdeckgestänges 2 ist und bei geschlossenem Fahrzeugdach für eine ausreichende Stoffspannung im Bezugstoff 3 sorgt. Der Spannbügel 8 liegt unmittelbar hinter karosseriefesten Überrollbügeln 7 und ist näherungsweise U-förmig mit Seitenschenkeln 8a und 8b und einem die Seitenschenkel verbindenden Querabschnitt 8c ausgebildet, wobei die Stirnseiten der Seitenschenkel 8a, 8b sich zum Fahrzeuginnenraum hin erstrecken und der verbindende Querabschnitt 8c näher am Heck liegt. In Schließposition des Faltverdecks liegt der U-förmige Spannbügel etwa in einer horizontalen Ebene. In dem Zwischenraum, der von den Seitenschenkeln 8a und 8b sowie dem hinteren Querabschnitt 8c des Spannbügels begrenzt wird, ist eine fest mit dem Spannbügel verbundene Abdeckplatte 9 aufgenommen, die den Zwischenraum vollständig ausfüllt. Die Abdeckplatte 9 ist ohne Möglichkeit einer Relativbewegung fest mit dem Spannbügel 8 verbunden. Die Abdeckplatte 9 bildet bei geschlossenem Fahrzeugdach eine Hutablage, die sich unterhalb des Verdeckbezugsstoffes 3 und hinter den Überrollbügeln 7 horizontal im Fahrzeuginnenraum erstreckt und den Fahrzeuginnenraum von dem Stauraum 4 separiert.

Das Verdeckgestänge 2 ist an einer Stellkonsole 10 gehalten, die über ein Drehgelenk 11 schwenkbar um eine Rotationsachse 12 an der Fahrzeugkarosserie gelagert ist. An dieser Stellkonsole 10 ist auch der Spannbügel 8 über Drehgelenke 13 mit in Querrichtung verlaufender Rotationsachse 14 drehbar gehalten, wobei die Drehgelenke 13 benachbart zu den Stirnseiten der Seitenschenkel 8a und 8b des Spannbügels 8 angeordnet sind. Die Rotationsachsen 12 und 14 von Stellkonsole 10 und Spannbügel 8 liegen parallel zueinander und verlaufen in Querrichtung, sind jedoch zueinander beabstandet. Das Drehgelenk 13 am Spannbügel 8 liegt näher am Fahrzeugheck als das Drehgelenk 11 an der Stellkonsole 10.

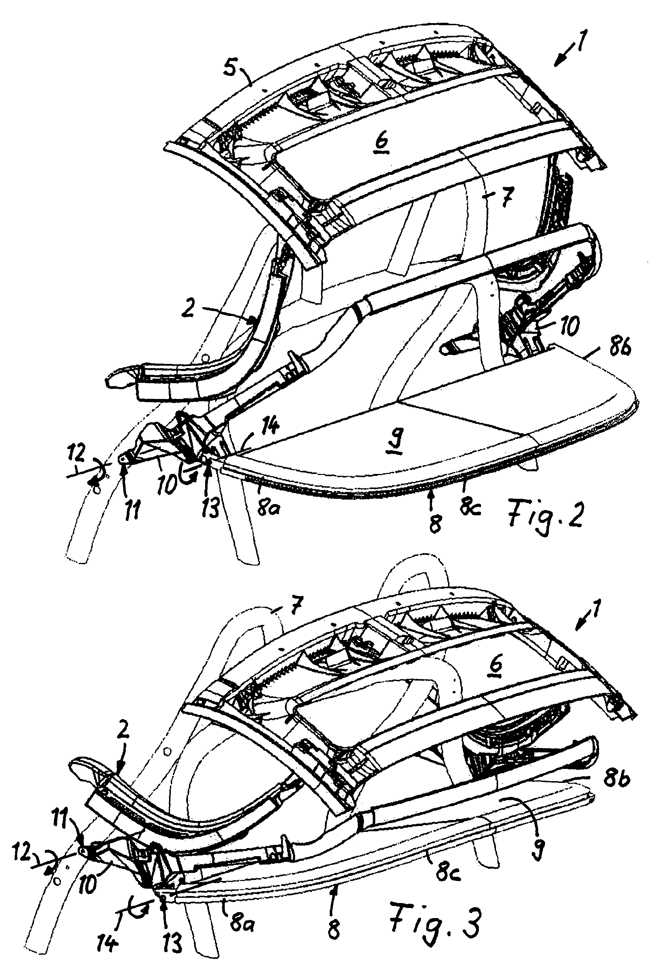

Zur Ablage des Fahrzeugdaches wird die Stellkonsole 10, wie in den Figuren 2 und 3 dargestellt, um die Rotationsachse 12 des Drehgelenkes 11 nach hinten verschwenkt. Zugleich wird das Verdeckgestänge 2 zusammengefaltet und ebenfalls in Richtung Fahrzeugheck verschwenkt. Während der Ablagebewegung behält der hintere Spannbügel 8 einschließlich darin aufgenommener Abdeckplatte 9 die horizontale Position näherungsweise bei, wofür der Spannbügel 8 um die Rotationsachse 14 seines Drehgelenkes 13 in Gegenrichtung zur Schwenkbewegung der Stellkonsole 10 verschwenkt wird, so dass die Schwenkbewegung der Stellkonsole 10 kompensiert wird, zugleich aber der Spannbügel 8 einschließlich Abdeckplatte 9 vertikal abgesenkt wird.

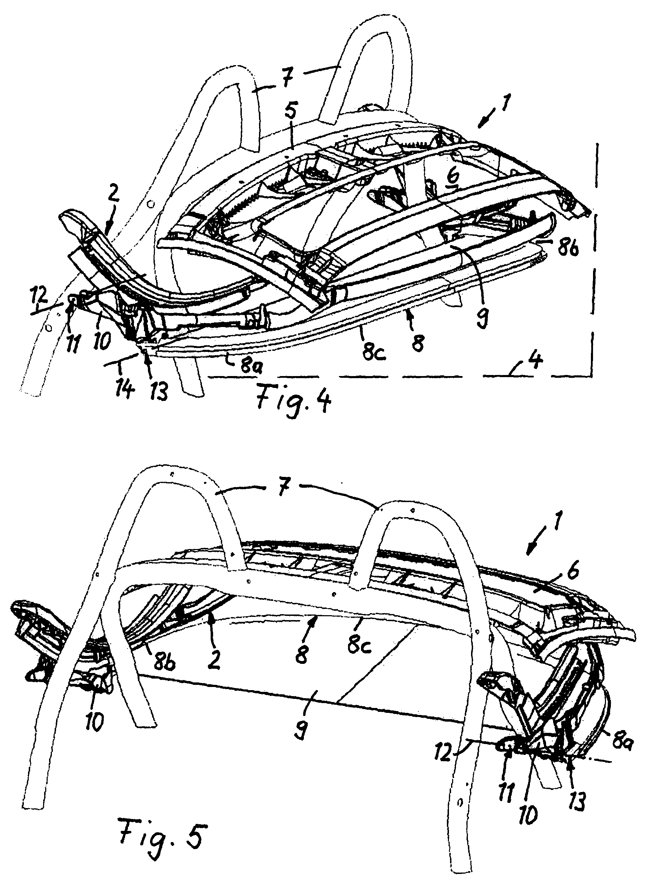

Mit Erreichen der Ablageposition - Fig. 4 und Fig. 5 - liegt das Faltverdeck 1 vollständig im Stauraum 4, wobei die Abdeckplatte 9 und der umgreifende Spannbügel 8 die untere, horizontale Abdeckung bzw. den Boden des zusammengefalteten Dachpaketes bilden, so dass Abdeckplatte 9 und Spannbügel 8 als Raumteiler zwischen dem frei nutzbaren Bereich des Kofferraumes und dem Stauraum im engeren Sinne dienen, in welchem die Dachteile abgelegt sind.

In Ablageposition bilden die Dachteile ein übereinander gefaltetes Dachteilpaket mit der zuunterst liegenden Abdeckplatte 9 und Spannbügel 8 und obenauf liegendem vorderen Dachteil, welches die vordere Dachkappe 5 und das Schiebedach 6 umfasst.

### Bezugszeichenliste

- 1: Faltverdeck
- 2: Verdeckgestänge
- 3: Bezugstoff
- 4: Stauraum
- 5: Dachkappe
- 6: Schiebedach
- 7: Überrollbügel
- 8: Spannbügel
- 8a: Seitenschenkel
- 8b: Seitenschenkel
- 8c: Querabschnitt
- 9: Abdeckplatte
- 10: Stellkonsole
- 11: Drehgelenk
- 12: Rotationsachse
- 13: Drehgelenk
- 14: Rotationsachse

## Patentansprüche

1. Cabriolet-Fahrzeug mit einem Faltverdeck (1), bestehend aus einem Verdeckgestänge (2) und einem vom Verdeckgestänge (2) getragenen Verdeckbezugstoff (3), wobei das Faltverdeck (1) zwischen einer Schließposition und einer Ablageposition verstellbar und in Ablageposition in einem heckseitigen Stauraum (4) abgelegt ist, und wobei das Verdeckgestänge (2) einen Spannbügel (8) umfasst, der in Schließposition des Faltverdecks (1) den Verdeckbezugstoff (3) mit Spannung beaufschlagt,
**dadurch gekennzeichnet,**
**dass** auf der dem Fahrzeuginnenraum zugewandten Seite des Spannbügels (8) eine Abdeckplatte (9) fest am Spannbügel (8) gehalten ist, die in Schließposition zumindest näherungsweise eine horizontale Stellung einnimmt, wobei die Abdeckplatte (9) bei der Überführung des Faltverdecks (1) zwischen Schließ- und Ablageposition gemeinsam mit dem Spannbügel (8) relativ zur Fahrzeugkarosserie zu verstellen ist.

2. Cabriolet-Fahrzeug nach Anspruch 1,
**dadurch gekennzeichnet,**
**dass** der Spannbügel (8) näherungsweise U-Form mit zwei Seitenschenkeln (8a, 8b) und einem die Seitenschenkel (8a, 8b) verbindenden Querabschnitt (8c) aufweist und in Schließposition eine näherungsweise horizontale Stellung einnimmt, wobei die Abdeckplatte (9) im Zwischenraum zwischen den Seitenschenkeln (8a, 8b) und dem Querabschnitt (8c) angeordnet ist.

3. Cabriolet-Fahrzeug nach Anspruch 2,
**dadurch gekennzeichnet,**
**dass** die Abdeckplatte (9) die U-Form des Spannbügels (8) zumindest näherungsweise ausfüllt.

4. Cabriolet-Fahrzeug nach einem der Ansprüche 1 bis 3,
**dadurch gekennzeichnet,**
**dass** die Abdeckplatte (9) in Schließposition des Fahrzeugdaches den Stauraum (4) vom Kofferraum des Fahrzeuges separiert.

5. Cabriolet-Fahrzeug nach einem der Ansprüche 1 bis 4,
**dadurch gekennzeichnet,**
**dass** die Abdeckplatte (9) in Ablageposition des Fahrzeugdaches den Stauraum (4) vom Kofferraum separiert.

6. Cabriolet-Fahrzeug nach einem der Ansprüche 1 bis 5,
**dadurch gekennzeichnet,**
**dass** die Abdeckplatte (9) in Ablageposition den Boden des Stauraumes (4) bildet.

7. Cabriolet-Fahrzeug nach einem der Ansprüche 1 bis 6,
**dadurch gekennzeichnet,**
**dass** der Spannbügel (8) an einer Stellkonsole (10) gehalten ist, die schwenkbar an der Fahrzeugkarosserie gelagert ist.

8. Cabriolet-Fahrzeug nach einem der Ansprüche 1 bis 7,
**dadurch gekennzeichnet,**
**dass** die Abdeckplatte (9) in Schließposition zumindest näherungsweise parallel zu ihrer Lage in Ablageposition steht.

9. Cabriolet-Fahrzeug nach einem der Ansprüche 1 bis 8,
**dadurch gekennzeichnet,**
**dass** der Spannbügel (8) über eine Mehrgelenkkinematik an die Fahrzeugkarosserie gekoppelt ist.

10. Cabriolet-Fahrzeug nach einem der Ansprüche 1 bis 9,
**dadurch gekennzeichnet,**
**dass** die Abdeckplatte (9) in Schließposition eine Hutablage bildet.
